(19) Europäisches Patentamt
European Patent Office
Office européen des brevets

(11) **EP 3 730 350 B1**

(12) **FASCICULE DE BREVET EUROPEEN**

(45) Date de publication et mention
de la délivrance du brevet:
**16.06.2021 Bulletin 2021/24**

(51) Int Cl.:
**B60R 16/037** (2006.01)

(21) Numéro de dépôt: **20158924.9**

(22) Date de dépôt: **24.02.2020**

(54) **PROCÉDÉ ET DISPOSITIF DE RÉGLAGE DE LA POSITION D'AU MOINS UN ÉLÉMENT D'UN VÉHICULE AUTOMOBILE**

VERFAHREN UND VORRICHTUNG ZUR EINSTELLUNG DER POSITION MINDESTENS EINES ELEMENTS EINES KRAFTFAHRZEUGS

METHOD AND DEVICE FOR ADJUSTING THE POSITION OF AT LEAST ONE ELEMENT OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2019 FR 1904465**

(43) Date de publication de la demande:
**28.10.2020 Bulletin 2020/44**

(73) Titulaire: **RENAULT S.A.S.**
**92100 Boulogne-Billancourt (FR)**

(72) Inventeurs:
• **COMPS, Christophe**
**31270 Cugnaux (FR)**
• **GIACCONE, Thierry**
**31470 Fonsorbes (FR)**

(56) Documents cités:
**EP-A1- 3 162 636        EP-A1- 3 453 589**
**WO-A1-01/64468        WO-A1-2013/101054**
**WO-A2-2015/090570      US-A1- 2015 148 989**
**US-A1- 2018 354 440**

**Description**

DOMAINE TECHNIQUE DE L'INVENTION

La présente invention concerne de manière générale le confort des individus situés dans un véhicule automobile.
Elle concerne plus particulièrement un procédé et un dispositif de réglage de la position d'au moins un élément d'un véhicule automobile, cet élément pouvant être une lame partiellement réfléchissante d'un afficheur tête haute, un point d'ancrage de ceinture de sécurité, un rétroviseur intérieur ou extérieur...

ETAT DE LA TECHNIQUE

Les réglages des éléments d'un véhicule automobile, comme par exemple des rétroviseurs, doivent être adaptés à chaque conducteur afin de rendre la conduite du véhicule agréable et surtout d'améliorer la sécurité. Un procédé et un dispositif pour des réglages automatiques est décrit dans WO0164468.
Certains éléments comme la position du siège du conducteur du véhicule sont généralement réglés manuellement par le conducteur dès son arrivée dans le véhicule car un mauvais réglage gênerait une utilisation convenable du véhicule. D'autres réglages, comme par exemple le point d'ancrage haut de la ceinture de sécurité, sont généralement réglés au moment des premières utilisations du véhicule automobile et ne sont plus modifiés par la suite, même en cas de changement de conducteur.
Cependant, un mauvais réglage du siège (position dans le véhicule mais également inclinaison du dossier et position de l'appui-tête) et des éléments utiles à la conduite peut conduire à une mauvaise installation du conducteur et donc rendre la conduite dangereuse.

PRESENTATION DE L'INVENTION

La présente invention propose d'améliorer la sécurité du véhicule en automatisant certains réglages.
L'invention s'applique alors à un véhicule automobile comportant au moins trois systèmes d'acquisition d'un signal sonore, un actionneur adapté à modifier la position d'un élément, et une unité de commande adaptée à piloter ledit actionneur.
On propose alors selon l'invention un procédé de réglage de la position dudit élément comprenant, lorsque lesdits au moins trois systèmes d'acquisition ont reçu un signal sonore émis par un individu présent dans le véhicule automobile, des étapes de :

- détermination, par l'unité de commande, de la position de la bouche dudit individu en fonction de paramètres de réception dudit signal sonore par lesdits au moins trois systèmes d'acquisition, et
- réglage par l'actionneur de la position dudit élément sur la base d'une commande générée par l'unité de commande en fonction de la position déterminée de la bouche de l'individu.

Ainsi, grâce à l'invention, le réglage de l'élément du véhicule automobile est effectué à partir de la détermination de la position de la bouche d'un individu. Ce réglage est donc personnalisé et peut donc être ajusté à chaque fois qu'un individu différent entre dans l'habitacle du véhicule automobile.
D'autres caractéristiques avantageuses et non limitatives du procédé conforme à l'invention, prises individuellement ou selon toutes les combinaisons techniquement possibles, sont les suivantes :

- ledit élément est une lame partiellement réfléchissante d'un dispositif d'affichage tête-haute, ladite étape de réglage comprenant une étape d'ajustement d'un angle d'inclinaison de ladite lame partiellement réfléchissante en fonction de la position déterminée des yeux dudit individu ;
- ledit élément est un rétroviseur dudit véhicule automobile, ladite étape de réglage comprenant une étape d'ajustement d'un angle d'inclinaison dudit rétroviseur en fonction de la position déterminée des yeux dudit individu ;
- ledit élément est une ceinture de sécurité, ladite étape de réglage comprenant une étape d'ajustement de la hauteur d'un point d'ancrage de ladite ceinture de sécurité, préférentiellement par comparaison de la position déterminée de la bouche avec un premier seuil prédéterminé, un deuxième seuil prédéterminé, un troisième seuil prédéterminé et un quatrième seuil prédéterminé ;
- il est prévu des étapes de détermination, par l'unité de commande, d'un premier retard de réception dudit signal sonore entre un premier des systèmes d'acquisition et un deuxième des systèmes d'acquisition du signal sonore, de détermination, par l'unité de commande, d'un deuxième retard de réception dudit signal sonore entre un troisième des systèmes d'acquisition et ledit premier système d'acquisition, puis à l'étape de détermination, la position de la bouche dudit individu est déterminée sur la base des premier et deuxième retards ;

- le véhicule automobile étant équipé d'un quatrième système d'acquisition dudit signal sonore, il est prévu des étapes de détermination, par l'unité de commande, d'un troisième retard de réception dudit signal sonore entre le quatrième système d'acquisition et le premier système d'acquisition, puis à l'étape de détermination, la position de la bouche dudit individu est déterminée sur la base également du troisième retard déterminé ;
- il est également prévu une étape de vérification de la position de la bouche de l'individu par comparaison de la position déterminée avec une valeur prédéterminée, par exemple une position latérale de l'individu dans le véhicule automobile correspondant à une position latérale du centre d'un siège sur lequel l'individu est assis.

L'invention propose également dispositif de réglage de la position d'un élément d'un véhicule automobile, ledit dispositif comprenant au moins trois systèmes d'acquisition d'un signal sonore conçus pour chacun réceptionner un signal sonore émise dans l'habitacle du véhicule automobile, un actionneur adapté à modifier la position dudit élément, et une unité de commande programmée pour piloter ledit actionneur, et, lorsque lesdits au moins trois systèmes d'acquisition ont reçu un signal sonore émis par un individu présent dans le véhicule automobile, pour déterminer la position de la bouche dudit individu sur la base des instants de réception dudit signal sonore par lesdits au moins trois systèmes d'acquisition, et pour régler la position dudit élément sur la base d'une commande générée par l'unité de commande en fonction de la position déterminée de la bouche de l'individu.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

La figure 1 représente schématiquement une vue du dessus d'un véhicule automobile conforme à l'invention ;
La figure 2 représente une vue schématique de côté d'une partie du véhicule automobile de la figure 1 ;
La figure 3 représente une vue schématique d'un exemple d'habitacle du véhicule automobile de la figure 1 ;
La figure 4 représente une vue schématique d'un autre exemple d'habitacle du véhicule automobile de la figure 1 ;
La figure 5 représente, sous forme de logigramme, un premier exemple de procédé de réglage conforme à l'invention ;
La figure 6 représente, sous forme de logigramme, un deuxième exemple de procédé de réglage conforme à l'invention ;
La figure 7 est une représentation schématique des paramètres intervenant dans le deuxième exemple de procédé de réglage ;
La figure 8 représente, sous forme de logigramme, un troisième exemple de procédé de réglage conforme à l'invention ;
La figure 9 est une représentation schématique des paramètres intervenant dans le troisième exemple de procédé de réglage, et
La figure 10 est une autre représentation schématique des paramètres intervenant dans le troisième exemple de procédé de réglage.

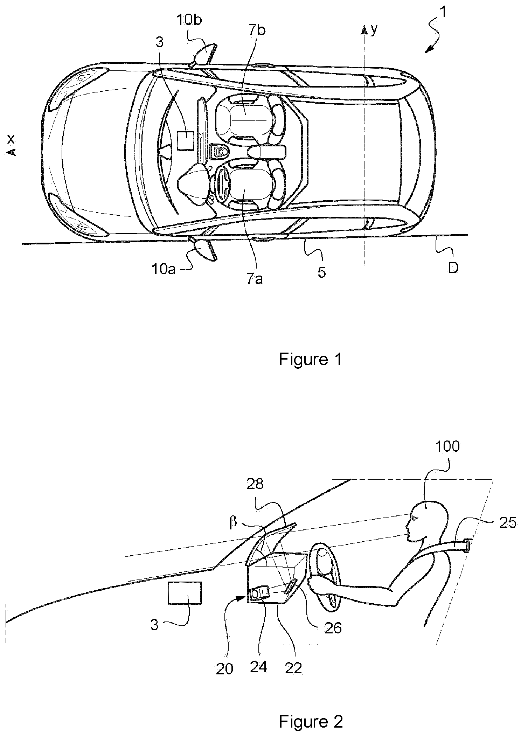

Sur la figure 1, on a représenté une vue du dessus d'un véhicule automobile 1 (également appelé véhicule 1 dans la suite). Classiquement, ce véhicule automobile 1 comporte quatre roues, un châssis qui supporte notamment un groupe motopropulseur, des éléments de carrosserie et des éléments d'habitacle. Le véhicule automobile 1 comprend notamment deux rétroviseurs extérieurs, un rétroviseur gauche 10a positionné à proximité d'un conducteur 100 (représenté sur la figure 2) du véhicule 1 et un rétroviseur droit 10b positionné à proximité d'un passager avant. Leurs orientations doivent alors être réglées en fonction de la taille du conducteur de façon à ce que celui-ci puisse bien appréhender l'environnement situé à l'arrière du véhicule 1.

Le véhicule automobile 1 comprend également au moins deux sièges avant, avec un siège avant gauche 7a destiné à recevoir le conducteur 100 du véhicule 1 et un siège avant droit 7b destiné à recevoir un passage avant.

La figure 2 montre une vue d'une partie du véhicule automobile 1, et en particulier une vue d'une partie de l'habitacle du véhicule 1. D'après cette représentation, le véhicule automobile 1 comprend également un dispositif d'affichage tête-haute 20. Ce dispositif d'affichage tête-haute 20 comprend un boîtier 22 qui loge et protège les éléments optiques du dispositif d'affichage tête-haute 20 (ensemble imageur 24, dispositif de renvoi 26 du faisceau lumineux issu de l'ensemble imageur).

Comme cela est représenté sur la figure 2, le faisceau lumineux qui émerge du boîtier 22 est projeté en direction d'une lame partiellement réfléchissante 28, parfois dénommée « combiner ». Cette lame partiellement réfléchissante 28 est conçue pour réfléchir partiellement le faisceau lumineux provenant du dispositif d'affichage tête-haute 20 vers le conducteur 100 du véhicule automobile 1. Son orientation doit alors être réglée de façon à ce que les images soient projetées en direction des yeux du conducteur, quelle que soit la taille de celui-ci.

Comme cela est représenté sur la figure 2, le véhicule est en outre équipé d'une ceinture de sécurité pour le conducteur. Il comporte à cet effet un point d'ancrage haut qui permet de faire passer la ceinture de sécurité au-dessus de l'épaule du conducteur. La hauteur de ce point d'ancrage haut doit être ajustée de façon à maintenir au mieux le conducteur en cas de choc frontal.

Enfin, le véhicule automobile 1 comporte divers autres éléments dont les positions sont ajustables, parmi lesquels par exemple le volant.

Comme représenté sur la figure 2, le véhicule 1 comprend par ailleurs une unité de commande 3. L'unité de commande 3 permet de contrôler et commander différents actionneurs du véhicule 1, notamment des actionneurs adaptés à modifier la position des rétroviseurs (en pratique l'orientation d'un miroir orientable d'un rétroviseur ou directement l'orientation d'un rétroviseur comprenant un miroir ou un écran), la position de la lame partiellement réfléchissante de l'afficheur tête haute, la hauteur du point d'ancrage de la ceinture de sécurité, la position du volant, l'orientation du siège, un système de massage localisé dans un siège, ...

Cette unité de commande 3 mémorise notamment une application informatique, constituée de programmes d'ordinateur comprenant des instructions dont l'exécution permet la mise en œuvre du procédé qui sera décrit ci-après.

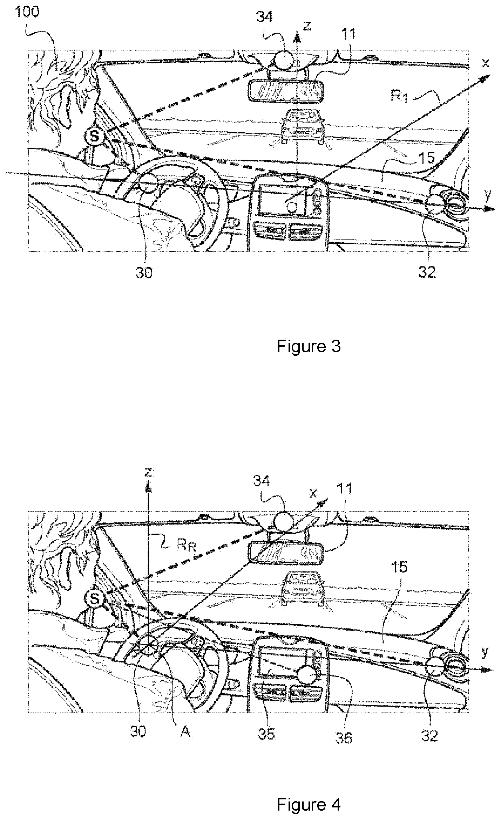

La figure 3 montre une autre vue d'une partie de l'habitacle du véhicule 1. Comme le montre cette figure, le véhicule automobile 1 comprend au moins trois systèmes d'acquisition 30, 32, 34 adaptés à acquérir un signal sonore. Ces systèmes d'acquisition 30, 32, 34 sont par exemple des microphones destinés à acquérir des signaux sonores émis à l'intérieur du véhicule 1, par exemple par le conducteur.

Lorsqu'il est prévu exactement trois systèmes d'acquisition 30, 32, 34, ces derniers ne sont pas répartis sur un même axe.

Ici, deux systèmes d'acquisition 30, 32 sont disposés chacun à une extrémité du tableau de bord 15 du véhicule automobile 1. Ces deux systèmes d'acquisition 30, 32 sont par exemple respectivement situés à proximité des orifices d'aération latéraux du tableau de bord 15 (mais pas trop près afin de ne pas enregistrer uniquement le signal sonore issu de ces orifices d'aération). En variante, ces deux systèmes d'acquisition pourraient être situés ailleurs, par exemple à l'intérieur des portières gauche et droite, au niveau d'une partie supérieure de ces portières.

Comme cela est visible sur la figure 3, le troisième système d'acquisition 34 est disposé dans une partie supérieure de l'habitacle du véhicule 1, par exemple au-dessus d'un rétroviseur intérieur 11 central.

En pratique, les positions des trois systèmes d'acquisition d'un signal sonore 30, 32, 34 sont déterminées de manière à ce qu'ils soient suffisamment spatialement éloignés pour augmenter la précision des mesures tout en respectant les contraintes mécaniques du véhicule 1. En particulier, les trois systèmes d'acquisition d'un signal sonore 30, 32, 34 sont positionnés dans des endroits déjà câblés de l'habitacle du véhicule 1 (afin de ne pas avoir à étendre le circuit électronique du véhicule 1 dans des endroits inhabituels, ce qui risquerait d'augmenter les coûts de fabrication du véhicule 1).

Selon une variante représentée sur la figure 4, le véhicule automobile 1 pourra comprendre plus de trois systèmes d'acquisition. Dans cette variante, il comporte un quatrième système d'acquisition 36 qui se présente aussi sous la forme d'un microphone destiné à acquérir des signaux sonores émis dans l'habitacle du véhicule automobile 1.

Comme cela est représenté sur la figure 4, ce quatrième système d'acquisition 36 est positionné dans le tableau de bord 15 du véhicule automobile 1. Ici, il est disposé sensiblement au centre du tableau de bord 15, par exemple à proximité d'un écran 35 d'un appareil multimédia (non représenté) du véhicule automobile 1. La position du quatrième système d'acquisition d'un signal sonore 36 est également déterminée comme un compromis entre les contraintes mécaniques de véhicule 1 et un placement spatial optimisé de tous les systèmes d'acquisition pour obtenir les mesures les plus précises.

La présente invention porte plus précisément sur une méthode de réglage des éléments du véhicule automobile 1. Par « éléments » à régler, on entend ici par exemple la position de l'un des rétroviseurs extérieurs 10a, 10b, la position du rétroviseur intérieur 11, l'orientation de la lame partiellement réfléchissante 28 du dispositif d'affichage tête-haute 20, la hauteur du point d'ancrage haut de la ceinture de sécurité 25. Le procédé de réglage peut également concerner le réglage d'autres éléments tels que la hauteur du volant, la position de l'appui-tête des sièges avant 7a, 7b, la position du siège ou un système de massage inclus dans un siège.

De manière plus générale, l'invention concerne tous les éléments du véhicule automobile 1 dont la position peut être réglée automatiquement par l'unité de commande 3.

La méthode de réglage décrite ici s'adresse de manière préférentielle aux éléments utiles pour un individu présent à l'avant du véhicule 1, notamment le conducteur 100 voire le passager avant.

Selon l'invention, le réglage des éléments du véhicule 1 va être effectué sur la base de la position de la bouche S de l'individu considéré.

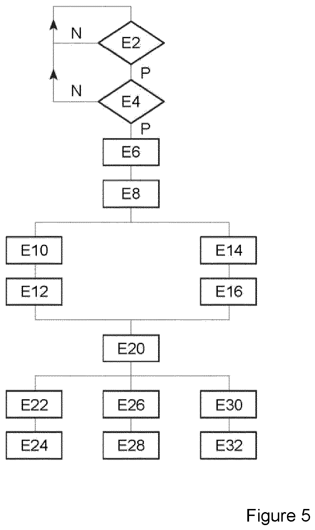

Les figures 5, 6 et 8 représentent trois exemples de procédés de réglage des éléments du véhicule 1 conformes à l'invention, illustrés sous forme d'étapes.

Les étapes communes à tous ces exemples portent les mêmes références et ne sont décrites qu'une seule fois dans la suite.

Préalablement à l'exécution de l'un de ces exemples de procédés de réglage, des conditions d'usage doivent être observées. Ces conditions d'usage du procédé de réglage correspondent par exemple au cas où le véhicule automobile 1 est à l'arrêt, de préférence avant le démarrage du véhicule 1. En variante, les conditions d'usage peuvent être étendues aux situations où le frein parking du véhicule 1 est activé.

La figure 5 représente un premier exemple de procédé de réglage d'un élément du véhicule 1.

Le procédé débute à l'étape E2. Lors de cette étape, il est vérifié que le véhicule automobile 1 se trouve dans les conditions d'usage précédemment introduites. Si ce n'est pas le cas, le procédé exécute à nouveau cette étape E2.

Si les conditions d'usage sont respectées, par exemple avant le démarrage du véhicule 1, le procédé se poursuit à l'étape E4. Lors de cette étape, l'unité de commande 3 détermine si une consigne de déclenchement d'acquisition et d'analyse de mesures par les différents systèmes d'acquisition 30, 32, 34, 36 d'un signal sonore a été émise.

En pratique, l'acquisition et l'analyse des mesures sont activées en permanence lorsque les conditions d'usage précédemment introduites sont observées et sont validées. De ce fait, l'unité de commande 3 peut détecter à tout moment, par l'intermédiaire des systèmes d'acquisition 30, 32, 34, 36, un son émis par l'individu considéré.

La mise en œuvre de la suite du procédé est toutefois ici subordonnée à ce que le son émis corresponde à un mot-clef prédéterminé, par exemple le mot « réglage ».

On peut prévoir un mot-clef par élément à régler, ou un mot-clef pour plusieurs éléments. Par exemple, l'expression « réglage visuel » pourra déclencher le réglage de la position des rétroviseurs, de l'orientation de la lame partiellement réfléchissante du dispositif d'affichage tête-haute et de la hauteur du volant tandis que l'expression « réglage d'éléments de sécurité » pourra déclencher le réglage de la position de l'appui-tête des sièges avant et de la hauteur du point d'ancrage haut de la ceinture de sécurité 25.

En variante, l'exécution de la suite du procédé pourra être subordonnée à d'autres formes de requêtes.

Ainsi, l'acquisition et l'analyse des mesures peuvent être déclenchées en utilisant un dispositif de reconnaissance vocale (non représenté) lorsqu'un signal sonore est émis dans l'habitacle du véhicule 1 (par exemple sur analyse du mot ou de l'expression émis(e) par un individu présent dans l'habitacle du véhicule).

Autrement, l'acquisition et l'analyse des mesures peuvent être déclenchées par sélection d'un bouton de commande (non représenté) présent dans le tableau de bord 15 du véhicule 1. Ce bouton de commande peut être associé à l'ensemble des éléments à régler, à un groupement d'éléments à régler ou à un unique élément à régler. Dans ce cas, la validation de l'acquisition et l'analyse des mesures reste conditionnée à l'émission d'un signal sonore par l'individu qui souhaite effectuer les réglages (et qui vient donc de sélectionner le bouton de commande). Dans ce cas, le signal sonore émis peut être quelconque (et pas forcément associé au mot « réglage » comme introduit précédemment).

Si, lors de l'étape E4, aucune consigne de déclenchement de l'acquisition et de l'analyse des mesures n'a été détectée par l'unité de commande 3, le procédé reprend à l'étape E2.

Si à l'étape E4, une consigne de déclenchement de l'acquisition et de l'analyse des mesures a été détectée, le procédé se poursuit à l'étape E6. En pratique, cela signifie qu'un signal sonore a été émis par l'individu qui souhaite effectuer les réglages, par exemple par le conducteur 100 du véhicule 1.

Lors de l'étape E6, le signal sonore émis est reçu par les différents systèmes d'acquisition 30, 32, 34, 36. L'unité de commande 3 détermine alors les instants de réception du signal sonore par chacun des différents systèmes d'acquisition 30, 32, 34, 36. Sachant que les différents systèmes d'acquisition 30, 32, 34, 36 ne sont pas positionnés à la même distance de la bouche S de l'individu, les instants de réception du signal sonore déterminés par l'unité de commande 3 sont différents pour chaque système d'acquisition d'un signal sonore 30, 32, 34, 36.

En pratique, la recherche de la réception du même signal sonore par les différents systèmes d'acquisition 30, 32, 34, 36 est réalisée grâce à l'exécution d'un algorithme classique de corrélation du signal sur des fenêtres temporelles glissantes comme les algorithmes connus d'annulation d'échos. Cet algorithme de corrélation du signal recherche, pour chacun des systèmes d'acquisition, une même courbe (en forme et amplitude) associée au signal sonore reçu. L'unité de commande 3 identifie alors l'instant de réception de ce signal sonore pour chaque système d'acquisition d'un signal sonore comme le point de départ de cette même courbe.

A partir de ces instants de réception, l'unité de commande 3 détermine les retards de réception du signal sonore par chaque système d'acquisition 30, 32, 34, 36. En pratique, en considérant un repère orthonormé $R_1$ (Oxyz) dont les axes sont représentés sur la figure 3 et dont l'origine O est située au milieu du segment défini par les systèmes d'acquisition 30, 32, les retards de réception $\Delta_i$ du signal sonore par chacun des systèmes d'acquisition i, de coordonnées $(x_i, y_i, z_i)$ dans le repère défini, s'écrivent (en notant $(xs, ys, zs)$ les coordonnées de la bouche S de l'individu, qui constitue le point d'émission du signal sonore, dans le repère défini) :

$$(\Delta_i)^2 = \frac{(x_i - x_S)^2 + (y_i - y_S)^2 + (z_i - z_S)^2}{c_S^2}$$

avec $c_S$ la vitesse de propagation du son dans l'air, de l'ordre de $c_S = 340$ m/s.

Ici, l'unité de commande 3 détermine les retards de réception du signal sonore par chaque système d'acquisition 32, 34, 36 par rapport à un système d'acquisition de référence, par exemple ici le système d'acquisition 30 (celui qui est localisé à la plus petite distance de la bouche S de l'individu). Afin de simplifier la mise en œuvre du procédé de réglage, un nouveau repère $R_R$ (Axyz) peut être défini avec une origine A au niveau du système d'acquisition 30 de référence (figure 4).

A l'issue de l'étape E8, dans le cas où exactement trois systèmes d'acquisition d'un signal sonore 30, 32, 34 sont présents dans l'habitacle du véhicule 1, l'unité de commande 3 a donc déterminé un premier retard $\Delta_1$ entre l'instant de réception du signal sonore par un deuxième système d'acquisition 32 et l'instant de réception du signal sonore par un premier système d'acquisition 30, le système d'acquisition 30 de référence, et un deuxième retard $\Delta_2$ entre l'instant de réception du signal sonore par un troisième système d'acquisition 34 et l'instant de réception du signal sonore par le système d'acquisition 30 de référence.

En notant $\Delta_R$ le retard de réception du signal sonore associé au système d'acquisition 30 de référence et $\Delta_{32}$ le retard de réception associé au premier système d'acquisition 32, le premier retard $\Delta_1$ s'écrit sous la forme :

$$\Delta_1 = \Delta_{32} - \Delta_R = \sqrt{\frac{(x_{32} - x_S)^2 + (y_{32} - y_S)^2 + (z_{32} - z_S)^2}{c_S^2}} - \sqrt{\frac{(-x_S)^2 + (-y_S)^2 + (-z_S)^2}{c_S^2}}$$

avec $(x_{32}, y_{32}, z_{32})$ les coordonnées du système d'acquisition d'un signal sonore 32 dans le repère $R_R$.

De plus, par définition du repère $R_R$ et comme visible sur la figure 4, les coordonnées du premier système d'acquisition d'un signal sonore 32 se simplifient ici avec $x_{32} = 0$ et $z_{32} = 0$, le premier retard $\Delta_1$ s'écrit alors sous la forme :

$$\Delta_1 = \Delta_{32} - \Delta_R = \sqrt{\frac{(-x_S)^2 + (y_{32} - y_S)^2 + (-z_S)^2}{c_S^2}} - \sqrt{\frac{(-x_S)^2 + (-y_S)^2 + (-z_S)^2}{c_S^2}}$$

De manière similaire, en notant $\Delta_{34}$ le retard de réception associé au premier système d'acquisition 34 et $(x_{34}, y_{34}, z_{34})$ ses coordonnées dans le repère $R_R$ (coordonnées connues par construction), le deuxième retard $\Delta_2$ s'écrit :

$$\Delta_2 = \Delta_{34} - \Delta_R = \sqrt{\frac{(x_{34} - x_S)^2 + (y_{34} - y_S)^2 + (z_{34} - z_S)^2}{c_S^2}} - \sqrt{\frac{(-x_S)^2 + (-y_S)^2 + (-z_S)^2}{c_S^2}}$$

Dans le cas où un quatrième système d'acquisition d'un signal sonore 36 est présent dans l'habitacle du véhicule 1, à l'issue de l'étape E8, l'unité de commande 3 a également déterminé un troisième retard $\Delta_3$ entre l'instant de réception du signal sonore par le quatrième système d'acquisition 36 et l'instant de réception par le système d'acquisition 30 de référence.

En notant $\Delta_{36}$ le retard de réception associé au quatrième système d'acquisition 36 (de coordonnées $(x_{36}, y_{36}, z_{36})$ dans le repère $R_R$, connues par construction), le troisième retard $\Delta_3$ s'écrit sous la forme :

$$\Delta_3 = \Delta_{36} - \Delta_R = \sqrt{\frac{(x_{36} - x_S)^2 + (y_{36} - y_S)^2 + (z_{36} - z_S)^2}{c_S^2}} - \sqrt{\frac{(-x_S)^2 + (-y_S)^2 + (-z_S)^2}{c_S^2}}$$

Dans le cas où l'habitacle du véhicule ne comprend que les trois systèmes d'acquisition d'un signal sonore 30, 32, 34, le procédé se poursuit à l'étape E10.

Dans ce cas, le système d'équations défini à partir du premier et du deuxième retard comprend deux équations ($\Delta_1$ et $\Delta_2$) mais trois inconnues ($x_S$, $y_S$, $z_S$) pour déterminer la position de la bouche S de l'individu qui a émis le signal sonore. Afin de pouvoir résoudre le système d'équations, il est donc nécessaire de poser une hypothèse supplémentaire ou de déterminer une autre équation. Ici, on considère que la position latérale de la bouche S (autrement dit la coordonnée $y_S$ de la bouche S de l'individu) est connue et égale à la coordonnée latérale $y_C$ du centre du siège sur lequel est assis l'individu (étape E10). Cette hypothèse est due au fait que les individus installés à l'avant du véhicule automobile 1 sont contraints par l'assise des sièges à rester au centre de ceux-ci.

Avec cette hypothèse, seules les coordonnées $x_S$ et $z_S$ de la position de la bouche S de l'individu sont inconnues (et le système peut à présent être résolu car il comporte deux équations à deux inconnues).

A l'étape E12, le système d'équations est donc résolu numériquement par l'unité de commande 3 (par exemple par un processeur non représenté de l'unité de commande 3) qui détermine alors la position de la bouche S de l'individu qui a émis le signal sonore mesuré.

Dans le cas où l'habitacle du véhicule comprend quatre systèmes d'acquisition 30, 32, 34, 36, après la détermination des premier, deuxième et troisième retards, le procédé se poursuit à l'étape E14. Dans ce cas, le système d'équations défini à partir des premier, deuxième et troisième retards comprend trois équations ($\Delta_1$, $\Delta_2$ et $\Delta_3$) et trois inconnues ($x_S$, $y_S$, $z_S$) pour déterminer la position de la bouche S de l'individu qui a émis le signal sonore. Ce système est donc résolu numériquement par l'unité de commande 3 afin de déterminer la position de la bouche S de l'individu.

D'un point de vue géométrique, le premier retard $\Delta_1$ permet de définir un ensemble des solutions comme une première sphère dont le centre correspond à la position du système d'acquisition d'un signal sonore 32. L'utilisation du deuxième retard $\Delta_2$ permet de limiter l'ensemble des solutions à un cercle correspondant à l'intersection entre la première sphère et une deuxième sphère dont le centre correspond à la position du système d'acquisition d'un signal sonore 34. L'utilisation du troisième retard $\Delta_3$ permet de limiter l'ensemble des solutions à deux points distincts correspondant à l'intersection entre le cercle précédent et une troisième sphère dont le centre correspond à la position du système d'acquisition d'un signal sonore 36. Cependant parmi ces deux points distincts, l'un est situé à l'avant du véhicule 1 (car il présente une coordonnée positive selon l'axe x) et ne peut donc pas être la position de la bouche S de l'individu. La solution satisfaisante pour déterminer la position de la bouche S de l'individu est donc unique.

Comme cela est représenté sur la figure 5, le procédé se poursuit à l'étape E16 dans laquelle la position déterminée de la bouche S est vérifiée. Pour cela, la coordonnée latérale ys déterminée est comparée à une valeur prédéterminée. En effet, comme l'individu est contraint par l'assise de son siège, il est possible de comparer la coordonnée latérale $y_S$ déterminée à la coordonnée latérale $y_C$ du centre du siège qui est connue afin de vérifier les mesures effectuées. En pratique, si l'écart entre les deux est faible, par exemple inférieur à quelques centimètres, les mesures sont considérées comme fiables. En effet, cela signifie que la coordonnée latérale $y_C$ du centre du siège est une bonne approximation de la coordonnée latérale ys de la bouche S de l'individu. En revanche, si l'écart entre la coordonnée latérale $y_S$ déterminée et la coordonnée latérale yc du centre du siège est élevé, par exemple supérieur à quelques centimètres, l'unité de commande 3 génère une consigne à l'intention de l'individu afin que celui-ci émette un nouveau signal sonore afin qu'une nouvelle position de la bouche S soit déterminée. La vérification de la fiabilité de la mesure permet de garantir la sécurité des réglages qui vont être réalisés.

Le premier exemple de procédé de réglage représenté sur la figure 5 est par exemple destiné à permettre le réglage de la position du point d'ancrage haut de la ceinture de sécurité 25 de l'individu à partir de la position de sa bouche S déterminée.

En pratique ici, trois positions (ici en fait hauteurs) étalonnées en usine sont possibles pour le réglage du point d'ancrage haut de la ceinture de sécurité 25 correspondant respectivement à un réglage en position haute, un réglage en position standard et un réglage en position basse. En pratique, la position standard est une position intermédiaire entre la position haute et la position basse.

Ces trois positions sont associées à un premier seuil prédéterminé $T_{xav}$, à un deuxième seuil prédéterminé $T_{xar}$, à un troisième seuil prédéterminé $T_{zh}$ et à un quatrième seuil prédéterminé $T_{zb}$. Le premier seuil prédéterminé $T_{xav}$ est différent du deuxième seuil prédéterminé $T_{xar}$. Par exemple ici, le premier seuil prédéterminé $T_{xav}$ est inférieur au deuxième seuil prédéterminé $T_{xar}$. Le troisième seuil prédéterminé $T_{zh}$ est différent du quatrième seuil prédéterminé $T_{zb}$. Par exemple ici, le troisième seuil prédéterminé $T_{zh}$ est supérieur au quatrième seuil prédéterminé $T_{zb}$.

A l'étape E20, la coordonnée xs est comparée au premier seuil prédéterminé $T_{xav}$ et au deuxième seuil prédéterminé $T_{xar}$ tandis que la coordonnée zs est comparée au troisième seuil prédéterminé $T_{zh}$ et au quatrième seuil prédéterminé $T_{zb}$.

Ainsi, si la coordonnée $z_S$ de la bouche S est supérieure au troisième seuil prédéterminé $T_{zh}$ ou si la coordonnée $x_S$ est inférieure au premier seuil prédéterminé $T_{xav}$, le point d'ancrage haut de la ceinture de sécurité 25 doit être réglé en position haute. Le procédé se poursuit alors en une étape E22 au cours de laquelle l'unité de commande 3 génère une commande de réglage en position haute de cet élément et la transmet à l'actionneur associé. La hauteur du point d'ancrage de la ceinture de sécurité 25 est donc réglée en position haute à l'étape E24.

Si la coordonnée $z_S$ de la bouche S est inférieure au quatrième seuil prédéterminé $T_{zb}$ ou si la coordonnée $x_S$ est supérieure au deuxième seuil prédéterminé $T_{xar}$, le point d'ancrage haut de la ceinture de sécurité 25 doit être réglé en position basse. Le procédé se poursuit alors en une étape E26 au cours de laquelle l'unité de commande 3 génère une commande de réglage en position basse de cet élément et la transmet à l'actionneur associé. La hauteur du point d'ancrage de la ceinture de sécurité 25 est donc réglée en position basse à l'étape E28.

Sinon, si la coordonnées $z_S$ de la bouche S est comprise entre le quatrième seuil prédéterminé $T_{zb}$ et le troisième seuil prédéterminé $T_{zh}$ ou si la coordonnée $x_S$ est comprise entre le premier seuil prédéterminé $T_{xav}$ et le deuxième seuil prédéterminé $T_{xar}$, le point d'ancrage haut de la ceinture de sécurité 25 doit être réglé en position standard. Le procédé se poursuit alors en une étape E30 au cours de laquelle l'unité de commande 3 génère une commande de réglage en position standard de cet élément et la transmet à l'actionneur associé. La hauteur du point d'ancrage de la ceinture de sécurité 25 est donc réglée en position standard à l'étape E32.

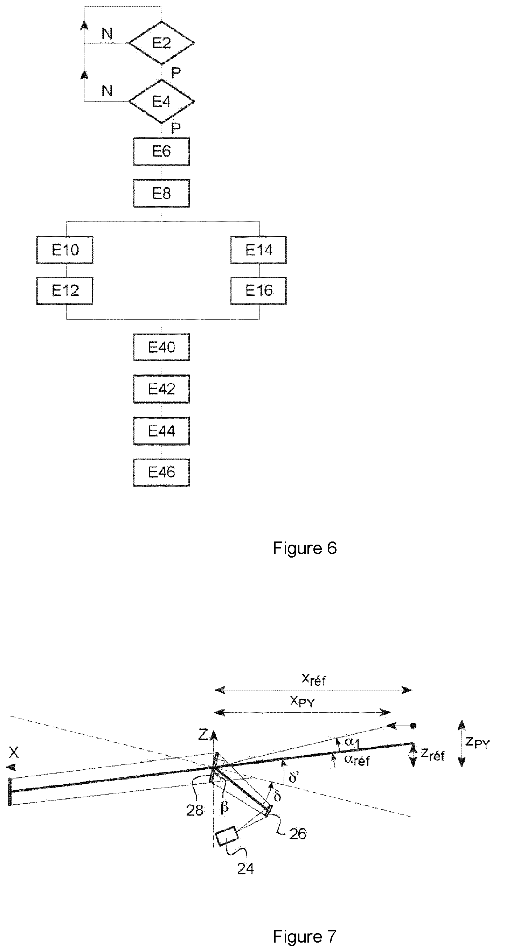

La figure 6 représente un deuxième exemple de procédé de réglage d'un élément du véhicule 1. La figure 7 représente les paramètres intervenant dans ce deuxième exemple de procédé de réglage.

Ce deuxième exemple de procédé de réglage comprend également les étapes E2 à E16 décrites précédemment et permettant de déterminer la position de la bouche S de l'individu qui a émis le signal sonore.

L'élément concerné par le deuxième procédé de réglage est par exemple ici un élément dit visuel, c'est-à-dire pour lequel la position des yeux de l'individu est importante. Le deuxième exemple de procédé de réglage concerne par exemple ici le réglage de l'inclinaison de la lame partiellement réfléchissante 28 du dispositif d'affichage tête-haute 20. Dans cet exemple, l'origine des coordonnées est considérée au niveau d'une position d'un point médian de la lame partiellement réfléchissante 28. Les coordonnées de la bouche S de l'individu par rapport à cette nouvelle origine sont notées $(x'_S, y'_S, z'_S)$.

Préalablement à la mise en œuvre des étapes spécifiques du procédé de réglage de la figure 6, la position de la lame partiellement réfléchissante 28 est étalonnée en usine selon une position de référence associée à des coordonnées de référence $(x_{réf}, y_{réf}, z_{réf})$ pour la position des yeux. En pratique, dans cette description, la position des yeux est définie à partir de la position d'un point de visée situé au milieu des deux yeux (la position de référence est donc associée à la position d'un point de visée de référence). Dans la suite, la position des yeux sera assimilée à la position du point de visée. La position de référence correspond par exemple à la position des yeux d'un individu de taille égale à 1,70 m. Lors de cet étalonnage, la lame partiellement réfléchissante 28 est alors inclinée d'un angle d'inclinaison de référence $(\beta_{réf}$ associé à cette position de référence. Cette position de référence permet alors de définir un angle de visée de référence $\alpha_{réf}$ qui s'exprime, d'après la figure 6, par la relation :

$$\tan(\alpha_{réf}) = \frac{z_{réf}}{x_{réf}}.$$

Le deuxième exemple de procédé de réglage représenté sur la figure 6 est donc destiné à permettre le réglage de l'orientation de la lame partiellement réfléchissante 28 du dispositif d'affichage tête-haute 20 à partir de la position du point de visée de l'individu. En d'autres termes, le deuxième exemple de procédé de réglage vise à ajuster un angle d'inclinaison $\beta$ de la lame partiellement réfléchissante 28 en fonction de la position des yeux de l'individu. Cet angle d'inclinaison $\beta$ est défini par rapport à une direction horizontale parallèle à l'axe x. L'ajustement de l'angle d'inclinaison $\beta$ permet en pratique d'ajuster la position d'une image virtuelle projetée par le dispositif d'affichage tête-haute 20.

Pour cela, lors de l'étape E40, l'unité de commande 3 détermine les coordonnées $(x_{PY}, y_{PY}, z_{PY})$ du point de visée situé au milieu des deux yeux à partir de la position de la bouche S déterminée à l'étape E12 ou E14.

En bonne approximation, le point de visée est aligné avec le milieu de la bouche S de l'individu. Ainsi, la coordonnée latérale $y_{PY}$ du point de visée est considérée comme étant égale à la coordonnée latérale $y'_S$ de la bouche S.

La détermination des coordonnées $x_{PY}$ et $z_{PY}$ repose sur l'utilisation de données prédéterminées de proportions du visage et du corps humain. En d'autres termes, les positions d'autres parties du corps de l'individu sont déterminées à partir de la position de la bouche S. Ces données prédéterminées sont issues d'analyses statistiques et sont par exemple mémorisées dans une mémoire de l'unité de commande 3. Ces données sont utilisées en fonction de l'élément concerné par le réglage.

D'après ces données prédéterminées, en bonne approximation, il est raisonnable de considérer que les yeux d'un individu sont en recul de l'ordre d'un centimètre par rapport à la bouche S. Ainsi, la coordonnée $x_{PY}$ est déterminée en soustrayant un centimètre à la coordonnée $x'_S$ déterminée de la bouche S.

D'après les données prédéterminées de proportions du visage et du corps humain, l'écart $\varepsilon$ entre la coordonnée $z_{PY}$ du point de visée et la coordonnée $z'_S$ de la bouche S de l'individu dépend de la taille $S_I$ de l'individu et de la hauteur $H_T$ de sa tête (avec la hauteur $H_T$ de sa tête estimée en pourcentage de la taille $S_I$ de l'individu). Plus précisément, cet écart $\varepsilon$ peut être donné par la formule suivante :

$$\varepsilon = z_{PY} - z_S = \frac{S_I \times H_T}{3}$$

En utilisant un panel des données prédéterminées, la demanderesse a observé qu'une estimation de cet écart $\varepsilon$ était de l'ordre de (7,85 $\pm$ 1,35) cm. La coordonnée $z_{PY}$ du point de visée est donc déterminée à partir de cette estimation moyenne. A l'issue de l'étape E40, les coordonnées ($x_{PY}$, $y_{PY}$, $z_{PY}$) du point de visée sont donc déterminées.

A l'étape E42, l'unité de commande 3 détermine un écart $\alpha_1$ d'un angle de visée par rapport à l'angle de visée de référence $\alpha_{réf}$ afin d'en déduire une correction à apporter à l'angle d'inclinaison $\beta$ de la lame partiellement réfléchissante 28. D'après la figure 7, l'écart $\alpha_1$ de l'angle de visée est défini à partir de la position du point de visée déterminée par la relation suivante :

$$\tan(\alpha_{réf} + \alpha_1) = \frac{z_{PY}}{x_{PY}}.$$

L'écart $\alpha_1$ de l'angle de visée entre la position des yeux de l'individu assis dans le véhicule 1 et la position de référence s'écrit alors :

$$\alpha_1 = \operatorname{atan}\left(\frac{z_{PY}}{x_{PY}}\right) - \operatorname{atan}\left(\frac{z_{réf}}{x_{réf}}\right).$$

Comme cela est représenté sur la figure 6, le procédé se poursuit à l'étape E44 avec la détermination de l'angle de correction à apporter pour ajuster l'inclinaison de la lame partiellement réfléchissante 28.

L'orientation de la lame partiellement réfléchissante 28 est considérée comme étant convenablement réglée lorsque la réflexion d'un faisceau lumineux médian 100 (provenant du miroir 26 du dispositif d'affichage tête-haute 20) par la lame partiellement réfléchissante se dirige vers le point de visée de l'individu (la réflexion du faisceau lumineux médian 100 est donc superposée avec la ligne de visée de l'individu).

En définissant les angles incident $\delta$ et de réflexion $\delta_R$ au niveau de la lame partiellement réfléchissante 28, il est nécessaire de déterminer la correction à apporter sur ces angles pour superposer la réflexion du faisceau lumineux médian 100 et la ligne de visée de l'individu. D'après la figure 7, la correction totale à apporter sur l'ensemble de ces deux angles est égale à l'écart $\alpha_1$ de l'angle de visée. Sachant que, d'après la loi de Snell-Descartes sur la réflexion, l'angle incident $\delta$ et l'angle de réflexion $\delta_1$ sont égaux, la correction à apporter à chacun de ces angles est égale à la moitié de la correction totale à apporter sur l'ensemble de ces deux angles, c'est-à-dire égale à la moitié de l'écart $\alpha_1$ de l'angle de visée.

Sachant que le miroir 26 du dispositif d'affichage tête-haute reste à une position fixe par rapport au point médian de la lame partiellement réfléchissante 28, la correction à apporter à l'angle d'inclinaison $\beta$ de la lame partiellement réfléchissante 28 est égale à la correction à apporter à l'angle incident $\delta$ ou de réflexion $\delta_R$. D'après ce qui a été introduit précédemment, la correction à apporter à l'angle d'inclinaison $\beta$ de la lame partiellement réfléchissante 28 est donc égale à la moitié de l'écart $\alpha_1$ de l'angle de visée. En d'autres termes, l'angle d'inclinaison $\beta$ de la lame partiellement réfléchissante est réglé de manière à ce que :

$$\beta - \beta_{réf} = \frac{\alpha_1}{2} = \frac{1}{2}\left(\operatorname{atan}\left(\frac{z_{PY}}{x_{PY}}\right) - \operatorname{atan}\left(\frac{z_{réf}}{x_{réf}}\right)\right).$$

Le procédé se poursuit alors à l'étape E46 lors de laquelle l'unité de commande 3 génère une commande de réglage de l'angle d'inclinaison $\beta$ de la lame partiellement réfléchissante et la transmet à l'actionneur associé. L'orientation de la lame partiellement réfléchissante 28 est donc réglée en fonction de la position des yeux de l'individu (en particulier de son point de visée) à l'issue de l'étape E46.

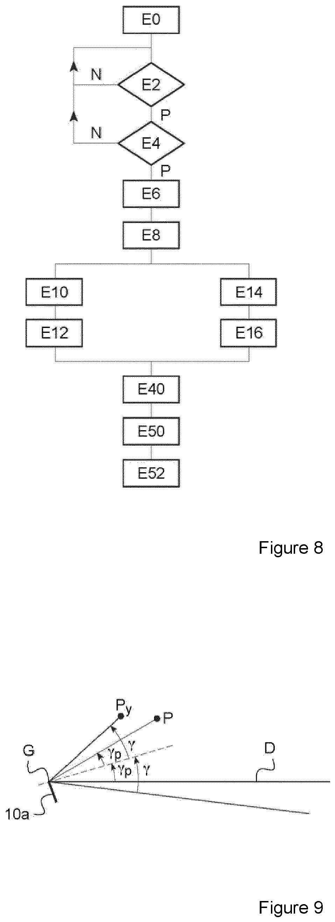

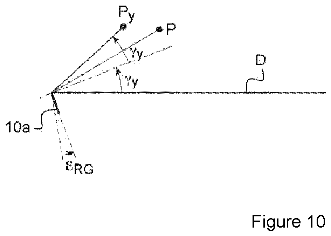

La figure 8 représente un troisième exemple de procédé de réglage d'un élément du véhicule 1. Les figures 9 et 10 représentent les paramètres intervenant dans ce troisième exemple de procédé de réglage.

L'élément concerné par le troisième procédé de réglage est par exemple ici l'un des rétroviseurs du véhicule automobile 1, c'est-à-dire le rétroviseur extérieur gauche 10a ou le rétroviseur extérieur droit 10b ou le rétroviseur interne 11. Le troisième exemple de procédé de réglage décrit ici porte sur le réglage du rétroviseur extérieur gauche 10a mais s'applique de la même manière aux deux autres rétroviseurs du véhicule automobile 1.

En pratique, les réglages des rétroviseurs sont effectués lorsque la position du siège du conducteur 100 est ajustée. Le troisième exemple de procédé de réglage commence donc par une étape E0 lors de laquelle le conducteur 100 ajuste la position avant/arrière de son siège 7a, c'est-à-dire selon la direction x.

Comme représenté sur la figure 8, le procédé se poursuit avec les étapes E2 à E16 décrites précédemment et permettant de déterminer la position de la bouche S de l'individu qui a émis le signal sonore.

Le procédé comprend ici également l'étape E40 telle que décrite précédemment et permettant de déterminer la position des yeux du conducteur 100 (en pratique, il s'agit de la position du point de visée du conducteur 100).

On note $(x'_{PY}, y'_{PY}, z'_{PY})$ les coordonnées associées à la position des yeux $P_Y$ du conducteur 100.

On suppose ici que toutes les données caractérisant la précédente position du siège sont mémorisées par l'unité de commande 3. En particulier, la précédente position des yeux P associée à la précédente position du siège du conducteur, dont les coordonnées sont notées $(x_{PP}, y_{PP}, z_{PP})$, est connue. Comme le siège 7a est déplacé selon la direction x, la position latérale des yeux du conducteur 100 n'a pas bougé entre les deux positions du siège, ainsi $y'_{PY} = y_{PP}$.

La première partie de ce procédé concerne le réglage de l'orientation du rétroviseur extérieur gauche 10a dans le plan (xy).

Comme cela est représenté sur la figure 9, un angle de décalage $\gamma$ est défini entre la ligne de visée et la droite orthogonale à la surface du rétroviseur extérieur gauche 10a. La surface de rétroviseur extérieur gauche 10a est par exemple ici plane. En variante, elle peut être concave ou convexe ou de forme plus complexe. Sur cette figure est également représenté le précédent angle de décalage $\gamma_P$ associé à la précédente position des yeux P de l'individu.

Le réglage du rétroviseur extérieur gauche 10a est considéré comme étant convenablement réalisé lorsque la réflexion du rayon provenant du point de visée de l'individu est alignée avec une ligne D dite « de caisse gauche » correspondant à la droite tangente à la partie gauche de la carrosserie du véhicule automobile 1 (voir figure 1).

La figure 9 montre que cet alignement est réalisé pour la précédente position des yeux P de l'individu, car la réflexion du rayon provenant du précédent point de visée P est alignée avec la ligne D « de caisse gauche ». D'après cette figure, et en notant $(x_{RG}, y_{RG}, z_{RG})$ les coordonnées du point G du rétroviseur extérieur gauche 10a au niveau duquel se produit la réflexion, le précédent angle de décalage $\gamma_P$ associé à la précédente position des yeux P de l'individu vérifie :

$$\tan(2\gamma_P) = \frac{y_{PP} - y_{RG}}{x_{RG} - x_{PP}}.$$

La figure 10 est une autre représentation schématique des paramètres intervenant dans le troisième exemple de procédé de réglage. Cette figure montre la situation à laquelle on souhaite arriver à la fin de la mise en œuvre de ce troisième exemple de procédé, avec un alignement réalisé entre la réflexion du rayon provenant du point de visée $P_Y$ et de la ligne D « de caisse gauche ». Lorsque cet alignement est réalisé, un angle final de décalage $\gamma_Y$ est défini entre la ligne de visée et la droite orthogonale à la surface du rétroviseur extérieur gauche 10a. D'après cette figure, cet angle final de décalage $\gamma_Y$ est défini par la relation suivante :

$$\tan(2\gamma_Y) = \frac{y'_{PY} - y_{RG}}{x_{RG} - x'_{PY}} = \frac{y_{PP} - y_{RG}}{x_{RG} - x'_{PY}}.$$

L'étape E50 du procédé de réglage permet alors de déterminer la correction $\varepsilon_{RG}$ à apporter à l'angle du rétroviseur extérieur gauche 10a pour que l'angle de décalage $\gamma$ soit corrigé en l'angle final de décalage $\gamma_Y$. D'après les figures 9 et 10, cette correction $\varepsilon_{RG}$ est égale à la différence entre l'angle final de décalage $\gamma_Y$ et le précédent angle de décalage $\gamma_P$, c'est-à-dire défini par la relation :

$$\varepsilon_{RG} = \gamma_Y - \gamma_P = \frac{1}{2}\left(\text{atan}\left(\frac{y_{PP} - y_{RG}}{x_{RG} - x'_{PY}}\right) - \text{atan}\left(\frac{y_{PP} - y_{RG}}{x_{RG} - x_{PP}}\right)\right).$$

Le procédé se poursuit alors en une étape E52 au cours de laquelle l'unité de commande 3 génère une commande de réglage de l'angle du rétroviseur extérieur gauche 10a et la transmet à l'actionneur associé. L'orientation du rétroviseur extérieur gauche 10a dans le plan (xy) est donc réglée en fonction de la position des yeux de l'individu (en particulier de son point de visée) à l'issue de l'étape E52.

Le réglage du rétroviseur selon l'axe z est similaire à celui décrit pour le réglage effectué dans le plan (xy). Cependant, au lieu de prendre la droite D « de caisse gauche » comme repère pour l'alignement de la réflexion du rayon, il faut ici s'appuyer sur une droite associée à un angle de visée basse qui intercepte la sol quatre mètres en arrière de la position du rétroviseur extérieur gauche 10a. Le déroulement du procédé est similaire à celui décrit pour les étapes E50 et E52 avec cette nouvelle référence et n'est pas décrit en détails ici.

**Revendications**

1. Procédé de réglage de la position d'au moins un élément (10a, 10b, 11, 25, 28) d'un véhicule automobile (1), ledit véhicule automobile (1) comportant au moins trois systèmes d'acquisition (30, 32, 34) d'un signal sonore, un actionneur adapté à modifier la position dudit élément (10a, 10b, 11, 25, 28), et une unité de commande (3) adaptée à piloter ledit actionneur, ledit procédé comprenant, lorsque lesdits au moins trois systèmes d'acquisition (30, 32, 34) ont reçu un signal sonore émis par un individu présent dans le véhicule automobile (1), des étapes de :

   - détermination, par l'unité de commande (3), de la position de la bouche (S) dudit individu en fonction de paramètres de réception dudit signal sonore par lesdits au moins trois systèmes d'acquisition (30, 32, 34), et
   - réglage par l'actionneur de la position dudit élément (10a, 10b, 11, 25, 28) sur la base d'une commande générée par l'unité de commande (3) en fonction de la position déterminée de la bouche (S) de l'individu.

2. Procédé selon la revendication 1, comprenant également une étape de détermination de la position des yeux dudit individu à partir de la position déterminée de la bouche (S) et préférentiellement aussi de données prédéterminées de proportions du visage.

3. Procédé selon la revendication 2, dans lequel ledit élément est une lame partiellement réfléchissante (28) d'un dispositif d'affichage tête-haute (20), ladite étape de réglage comprenant une étape d'ajustement d'un angle d'inclinaison de ladite lame partiellement réfléchissante (28) en fonction de la position déterminée des yeux dudit individu.

4. Procédé selon la revendication 2 ou 3, dans lequel ledit élément est un rétroviseur (10a, 10b, 11) dudit véhicule automobile (1), ladite étape de réglage comprenant une étape d'ajustement d'un angle d'inclinaison dudit rétroviseur (10a, 10b, 11) en fonction de la position déterminée des yeux dudit individu.

5. Procédé selon l'une quelconque des revendications 1 à 4, dans lequel ledit élément est une ceinture de sécurité (25), ladite étape de réglage comprenant une étape d'ajustement de la hauteur d'un point d'ancrage de ladite ceinture de sécurité (25), préférentiellement par comparaison de la position déterminée de la bouche (S) avec un premier seuil prédéterminé ($T_{xav}$), un deuxième seuil prédéterminé ($T_{xar}$), un troisième seuil prédéterminé ($T_{zh}$) et un quatrième seuil prédéterminé ($T_{zb}$).

6. Procédé selon l'une quelconque des revendications 1 à 5, dans lequel il est prévu des étapes de :

   - détermination, par l'unité de commande (3), d'un premier retard ($\Delta_1$) de réception dudit signal sonore entre un premier des systèmes d'acquisition (30) et un deuxième des systèmes d'acquisition (32) du signal sonore,
   - détermination, par l'unité de commande (3), d'un deuxième retard ($\Delta_2$) de réception dudit signal sonore entre un troisième des systèmes d'acquisition (34) et ledit premier système d'acquisition (30),

   et dans lequel, à l'étape de détermination, la position de la bouche (S) dudit individu est déterminée sur la base des premier et deuxième retards ($\Delta_1$, $\Delta_2$).

7. Procédé selon la revendication 6, dans lequel, le véhicule automobile (1) étant équipé d'un quatrième système d'acquisition dudit signal sonore (36), il est prévu des étapes de :

   - détermination, par l'unité de commande (3), d'un troisième retard ($\Delta_3$) de réception dudit signal sonore entre le quatrième système d'acquisition (36) et le premier système d'acquisition (30),

   et dans lequel, à l'étape de détermination, la position de la bouche (S) dudit individu est déterminée sur la base également du troisième retard ($\Delta_3$) déterminé.

8. Procédé selon la revendication 7, dans lequel il est également prévu une étape de vérification de la position de la bouche (S) de l'individu par comparaison de la position déterminée avec une valeur prédéterminée, par exemple une position latérale ($y_S$) de l'individu dans le véhicule automobile correspondant à une position latérale ($y_C$) du centre d'un siège sur lequel l'individu est assis.

9. Dispositif de réglage de la position d'un élément (10a, 10b, 11, 25, 28) d'un véhicule automobile (1), ledit dispositif comprenant :

- au moins trois systèmes d'acquisition d'un signal sonore (30, 32, 34) conçus pour chacun réceptionner un signal sonore émise dans l'habitacle du véhicule automobile (1),
- un actionneur adapté à modifier la position dudit élément, et
- une unité de commande (3) programmée pour :
piloter ledit actionneur, et, lorsque lesdits au moins trois systèmes d'acquisition (30, 32, 34) ont reçu un signal sonore émis par un individu présent dans le véhicule automobile (1), pour :

déterminer la position de la bouche (S) dudit individu sur la base des instants de réception dudit signal sonore par lesdits au moins trois systèmes d'acquisition (30, 32, 34), et
régler la position dudit élément sur la base d'une commande générée par l'unité de commande (3) en fonction de la position déterminée de la bouche (S) de l'individu.

10. Véhicule automobile (1) comportant un dispositif de réglage conforme à la revendication précédente.

## Patentansprüche

1. Verfahren zur Einstellung der Position mindestens eines Elements (10a, 10b, 11, 25, 28) eines Kraftfahrzeugs (1), wobei das Kraftfahrzeug (1) mindestens drei Systeme zur Erfassung (30, 32, 34) eines Tonsignals, ein Betätigungselement, das geeignet ist, die Position des Elements (10a, 10b, 11, 25, 28) zu ändern, und eine Steuereinheit (3), die geeignet ist, das Betätigungselement zu steuern, umfasst, wobei das Verfahren, wenn die mindestens drei Erfassungssysteme (30, 32, 34) ein Tonsignal empfangen haben, das von einer Person abgegeben wird, die im Kraftfahrzeug (1) anwesend ist, folgende Schritte umfasst:

- Bestimmen, durch die Steuereinheit (3), der Position des Mundes (S) der Person in Abhängigkeit von Parametern des Empfangs des Tonsignals durch die mindestens drei Erfassungssysteme (30, 32, 34), und
- Einstellen, durch das Betätigungselement, der Position des Elements (10a, 10b, 11, 25, 28) auf der Grundlage eines Befehls, der von der Steuereinheit (3) erzeugt wird, in Abhängigkeit von der bestimmten Position des Mundes (S) der Person.

2. Verfahren nach Anspruch 1, ebenfalls umfassend einen Schritt des Bestimmens der Position der Augen der Person anhand von der bestimmten Position des Mundes (S) und vorzugsweise auch von vorbestimmten Proportionsdaten des Gesichts.

3. Verfahren nach Anspruch 2, wobei das Element ein teilweise reflektierendes Blatt (28) einer Head-up-Display-Vorrichtung (20) ist, wobei der Schritt des Einstellens einen Schritt des Anpassens eines Neigungswinkels des teilweise reflektierendes Blatts (28) in Abhängigkeit von der bestimmten Position der Augen der Person umfasst.

4. Verfahren nach Anspruch 2 oder 3, wobei das Element ein Rückspiegel (10a, 10b, 11) des Kraftfahrzeugs (1) ist, wobei der Schritt des Einstellens einen Schritt des Anpassens eines Neigungswinkels des Rückspiegels (10a, 10b, 11) in Abhängigkeit von der bestimmten Position der Augen der Person umfasst.

5. Verfahren nach einem der Ansprüche 1 bis 4, wobei das Element ein Sicherheitsgurt (25) ist, wobei der Schritt des Einstellens einen Schritt des Anpassens der Höhe eines Verankerungspunkts des Sicherheitsgurts (25) umfasst, vorzugsweise durch Vergleichen der bestimmten Position des Mundes (S) mit einer ersten vorbestimmten Schwelle ($T_{xav}$), einer zweiten vorbestimmten Schwelle ($T_{Xar}$), einer dritten vorbestimmten Schwelle ($T_{Zh}$) und einer vierten vorbestimmten Schwelle ($T_{Zb}$).

6. Verfahren nach einem der Ansprüche 1 bis 5, wobei folgende Schritte vorgesehen sind:

- Bestimmen, durch die Steuereinheit (3), einer ersten Empfangsverzögerung ($\Delta_1$) des Tonsignals zwischen einem ersten der Systeme zur Erfassung (30) und einem zweiten der Systeme zur Erfassung (32) des Tonsignals,
- Bestimmen, durch die Steuereinheit (3), einer zweiten Empfangsverzögerung ($\Delta_2$) des Tonsignals zwischen einem dritten der Erfassungssysteme (34) und dem ersten Erfassungssystem (30),

und wobei beim Schritt des Bestimmens die Position des Mundes (S) der Person auf der Grundlage der ersten und zweiten Verzögerung ($\Delta_1$, $\Delta_2$) bestimmt wird.

**7.** Verfahren nach Anspruch 6, wobei, wobei das Kraftfahrzeug (1) mit einem vierten System zur Erfassung des Tonsignals (36) ausgerüstet ist, folgende Schritte vorgesehen sind:

- Bestimmen, durch die Steuereinheit (3), einer dritten Empfangsverzögerung ($\Delta_3$) des Tonsignals zwischen dem vierten Erfassungssystem (36) und dem ersten Erfassungssystem (30),

und wobei beim Schritt des Bestimmens die Position des Mundes (S) der Person ebenfalls auf der Grundlage der bestimmten dritten Verzögerung ($\Delta_3$) bestimmt wird.

**8.** Verfahren nach Anspruch 7, wobei ebenfalls ein Schritt des Überprüfens der Position des Mundes (S) der Person durch Vergleichen der bestimmten Position mit einem vorbestimmten Wert vorgesehen ist, zum Beispiel einer seitlichen Position (ys) der Person im Kraftfahrzeug, die eine seitlichen Position (yc) der Mitte eines Sitzes entspricht, auf dem die Person sitzt.

**9.** Vorrichtung zur Einstellung der Position eines Elements (10a, 10b, 11, 25, 28) eines Kraftfahrzeugs (1), die Vorrichtung umfassend:

- mindestens drei Systeme zur Erfassung eines Tonsignals (30, 32, 34), die dafür ausgelegt sind, jeweils ein Tonsignal zu empfangen, das im Fahrzeuginnenraum des Kraftfahrzeugs (1) abgegeben wird,
- ein Betätigungselement, das geeignet ist, die Position des Elements zu ändern, und
- eine Steuereinheit (3), die dafür programmiert ist: das Betätigungselement zu steuern, und, wenn die mindestens drei Erfassungssysteme (30, 32, 34) ein Tonsignal empfangen haben, das von einer Person abgegeben wird, die im Kraftfahrzeug (1) anwesend ist, dafür:

die Position des Mundes (S) der Person auf der Grundlage der Zeitpunkte des Empfangs des Tonsignals durch die mindestens drei Erfassungssysteme (30, 32, 34) zu bestimmen, und
die Position des Elements auf der Grundlage eines Befehls, der von der Steuereinheit (3) erzeugt wird, in Abhängigkeit von der bestimmten Position des Mundes (S) der Person einzustellen.

**10.** Kraftfahrzeug (1) aufweisend eine Einstellvorrichtung nach dem vorhergehenden Anspruch.


**Claims**

**1.** Method for setting the position of at least one element (10a, 10b, 11, 25, 28) of a motor vehicle (1), said motor vehicle (1) comprising at least three acquisition systems (30, 32, 34) for acquiring a sound signal, an actuator suitable for modifying the position of said element (10a, 10b, 11, 25, 28) and a control unit (3) suitable for driving said actuator, said method comprising, when said at least three acquisition systems (30, 32, 34) have received a sound signal emitted by an individual present in the motor vehicle (1), steps of:

- determination, by the control unit (3), of the position of the mouth (S) of said individual as a function of parameters of reception of said sound signal by said at least three acquisition systems (30, 32, 34), and
- setting by the actuator of the position of said element (10a, 10b, 11, 25, 28) on the basis of a command generated by the control unit (3) as a function of the determined position of the mouth (S) of the individual.

**2.** Method according to Claim 1, also comprising a step of determination of the position of the eyes of said individual from the determined position of the mouth (S) and, preferentially, also predetermined data on proportions of the face.

**3.** Method according to Claim 2, wherein said element is a partially reflecting plate (28) of a head-up display device (20), said setting step comprising a step of adjustment of an angle of inclination of said partially reflecting plate (28) as a function of the determined position of the eyes of said individual.

**4.** Method according to Claim 2 or 3, wherein said element is a rear-view mirror (10a, 10b, 11) of said motor vehicle (1), said setting step comprising a step of adjustment of an angle of inclination of said rear-view mirror (10a, 10b, 11) as a function of the determined position of the eyes of said individual.

**5.** Method according to any one of Claims 1 to 4, wherein said element is a safety belt (25), said setting step comprising a step of adjustment of the height of an anchoring point of said safety belt (25), preferentially by comparison of the determined position of the mouth (S) with a first predetermined threshold ($T_{xav}$), a second predetermined threshold ($T_{xar}$), a third predetermined threshold ($T_{zh}$) and a fourth predetermined threshold ($T_{zb}$).

6. Method according to any one of Claims 1 to 5, wherein there are provided steps of:

- determination, by the control unit (3), of a first delay ($\Delta_1$) in reception of said sound signal between a first of the acquisition systems (30) and a second of the acquisition systems (32) for acquiring the sound signal,
- determination, by the control unit (3), of a second delay ($\Delta_2$) in reception of said sound signal between a third of the acquisition systems (34) and said first acquisition system (30),

and wherein, in the determination step, the position of the mouth (S) of said individual is determined on the basis of the first and second delays ($\Delta_1$, $\Delta_2$).

7. Method according to Claim 6, wherein, the motor vehicle (1) being equipped with a fourth acquisition system for acquiring said sound signal (36), there are provided steps of:

- determination, by the control unit (3), of a third delay ($\Delta_3$) in reception of said sound signal between the fourth acquisition system (36) and the first acquisition system (30),

and wherein, in the determination step, the position of the mouth (S) of said individual is determined on the basis also of the third determined delay ($\Delta_3$).

8. Method according to Claim 7, wherein there is also provided a step of verification of the position of the mouth (S) of the individual by comparison of the determined position with a predetermined value, for example a lateral position ($y_s$) of the individual in the motor vehicle corresponding to a lateral position ($y_c$) of the centre of a seat on which the individual is seated.

9. Device for setting the position of an element (10a, 10b, 11, 25, 28) of a motor vehicle (1), said device comprising:

- at least three acquisition systems (30, 32, 34) for acquiring a sound signal, designed to each receive a sound signal emitted in the interior of the motor vehicle (1),
- an actuator suitable for modifying the position of said element, and
- a control unit (3) programmed to:
drive said actuator, and, when said at least three acquisition systems (30, 32, 34) have received a sound signal emitted by an individual present in the motor vehicle (1), to:

determine the position of the mouth (S) of said individual on the basis of the instants of reception of said sound signal by said at least three acquisition systems (30, 32, 34), and
set the position of said element on the basis of a command generated by the control unit (3) as a function of the determined position of the mouth (S) of the individual.

10. Motor vehicle (1) comprising a setting device according to the preceding claim.

Figure 1

Figure 2

Figure 3

Figure 4

Figure 5

Figure 6

Figure 7

Figure 8

Figure 9

Figure 10

## RÉFÉRENCES CITÉES DANS LA DESCRIPTION

**Documents brevets cités dans la description**

- WO 0164468 A